# EUROPÄISCHE PATENTSCHRIFT

(11) **EP 0 862 538 B1**
(45) Veröffentlichungstag und Bekanntmachung des Hinweises auf die Patenterteilung: **07.07.1999**
(21) Anmeldenummer: 96938957.6
(22) Anmeldetag: 25.09.1996
(51) Int. Cl.: C02F 1/36, C02F 1/48

(54) **VERFAHREN UND VORRICHTUNG ZUR BEHANDLUNG VON MIT MIKROORGANISMEN UND/ODER SCHADSTOFFEN BELASTETEM WASSER**
PROCESS AND DEVICE FOR TREATING WATER CONTAMINATED WITH MICRO-ORGANISMS AND/OR HARMFUL POLLUTANTS
PROCEDE ET DISPOSITIF DE TRAITEMENT D'EAU CHARGEE EN MICRO-ORGANISMES ET/OU EN POLLUANTS

(30) Priorität: 25.09.1995 DE 19537497
(43) Veröffentlichungstag der Anmeldung: 09.09.1998
(73) Patentinhaber: The National Engineering Research Center For Urban Pollution Control, Shanghai 200092 (CN); Gao, Yuan, D-10823 Berlin (DE)
(72) Erfinder: GAO, Yuan, D-10823 Berlin (DE); GAO, Tingyao, Shanghai 200092 (CN); HAN, Baiping, Shanghai 200092 (CN); ZHANG, Desheng, Shanghai 200092 (CN); LI, Jie, Shanghai 200092 (CN)
(74) Vertreter: Pfenning, Meinig & Partner
(86) Internationale Anmeldenummer: DE9601877
(87) Internationale Veröffentlichungsnummer: WO9711908

(56) Entgegenhaltungen:
- EP-A- 0 577 871
- WO-A-85/01965
- DE-A- 2 500 455
- DE-B- 2 555 175
- FR-A- 2 697 950
- Derwent's abstract, Nr. 91-93709/13, Woche 9113; & SU,A,1583361, (AS USSR BIOCHEM MI GROORG), 1990-08-07

## Beschreibung

Die Erfindung betrifft ein Verfahren nach dem Oberbegriff des Anspruchs 1 sowie eine Vorrichtung zur Durchführung dieses Verfahrens.

Es sind verschiedene Verfahren zur Desinfektion von Wasser bekannt. Die Desinfektionswirkung der Elektrolyse wird auf verschiedene Wirkungsmechanismen zurückgeführt. Grundsätzlich kann eine Einteilung in zwei Verfahrensprinzipien, die physikalische und die chemische Desinfektion erfolgen. Die Konstruktion der Reaktoren und die Elektrodenmaterialien unterscheiden sich je nach dem angewendeten Verfahrensprinzip.

Zu den physikalischen Wirkungsweisen zählen:
1. Desinfektion aufgrund der Temperaturerhöhung des Wassers. Die Temperaturerhöhung kann durch den elektrischen Widerstand des Wassers, der Elektroden oder der Grenzschicht zwischen Elektroden und Wasser hervorgerufen werden.
2. Desinfektion aufgrund des direkten Kontakts der Mikroorganismen mit den Elektroden. Die Desinfektion wird meist auf Kontakt der Mikroorganismen mit der Anode und auf Elektronenabgabe der Mikroorganismen zurückgeführt (US 4 384 943; EP 0 175 123 B1).
3. Zusammenstoß und Zerschlagung von Mikroorganismen aufgrund von Ionenbewegungen im Wasser während der Elektrolyse.
4. Zerstörung der Mikroorganismen durch Induktion in einem elektrostatischen Feld.

Zu den chemischen Wirkungsweisen zählen:
5. Desinfektion durch Chlor, das an der Anode durch Oxidation von Chlorid entsteht (z.B. US 3 873 438). Das Patent DE-A-2 311 504 beschreibt die Bildung n von atomarem Chlor aus Chlorid, das zu ClO⁻ reagiert.
6. Desinfektion durch Chlordioxid, das z.B. bei Zugabe von Chlorit unter Elektrolyse entsteht (US 2 163 793).
7. Desinfektion durch naszierenden Sauerstoff, der an der Anode durch Oxidation von Wasser entstehen kann (EP 0 175 123 B1).
8. Desinfektion durch Hydroxylradikale, die während der Elektrolyse erzeugt werden können (DE 3 428 582 A1). Durch entsprechendes Material der Anode kann die Hydroxylradikalbildung gefördert werden.
9. Nutzung der oligodynamischen Wirkung von Silberionen. Silber wird durch die langsame Auflösung einer Elektrode freigesetzt (US 3 936 364); Österreichische Patentschrift 138152).

Die Wirkung einer Desinfektionsanlage, die nach dem Elektrolyseverfahren arbeitet, kann häufig nicht auf eine einzelne Ursache zurückgeführt werden. Stoner et al. (US 4 384943) postuliert für sein Patent die Wirkung von elektrochemisch hergestellten Desinfektionsmitteln (wie Ozon, Chlor) und Zerstörung der Mikroorganismen durch Kontakt mit der Anode.

Die physikalischen Mechanismen wirken erst nach einer Reaktionszeit von mehreren Minuten. Um eine ausreichende Desinfektion sicherzustellen, muß das zu behandelnde Wasser für diese Zeit im Reaktor verweilen. Der Energieaufwand, um eine ausreichende Desinfektion durch physikalische Wirkungsmechanismen zu erreichen, ist sehr hoch. Deshalb werden Verfahren, die nach physikalischen Wirkungsmechanismen arbeiten, in der Praxis nur in seltenen Fällen eingesetzt.

Das Ausmaß der chemischen Wirkungsmechanismen ist stark vom verwendeten Elektrodenmaterial und der Zellenkonstruktion abhängig. Durch die elektrolytische Chlorerzeugung entstehen die bekannten Probleme der Wasserchlorung. Zudem sind hohe Chlorkonzentrationen (0,1 % bis 1,5 % Chlorid; Patent Nr. DE-A-2 311 504) erforderlich, um eine ausreichende Desinfektion zu erreichen. Mehrere Elektrolyseverfahren sind durch Beschränkung der Elektrodenlebensdauer aufgrund korrosiver Eigenschaften der Elektrolyte für die Praxis wirtschaftlich uninteressant. Die Erzeugung sowie Stabilisierung von Hydroxylradikalen bedarf einer Beschichtung der Anode mit Bleidioxid (DE 3428 582 A1). Ein Einsatz beispielsweise in der Trinkwasserbehandlung wäre aufgrund des Bleis nicht möglich.

Ein anderes relevantes Verfahren ist neben der Elektrolyse der Einsatz von Titandioxid. Seit über zwanzig Jahren ist bekannt, daß Titandioxid unter Einwirkung von UV-Strahlung desinfizierend wirkt. Titandioxid nimmt als Halbleiter Energie der UV-Strahlung (oder aus Licht) auf. Die Elektronen der Atome an der Halbleiteroberfläche werden dadurch aktiviert und diese Kombination von Titandioxid und UV-Strahlung wirkt desinfizierend. Nachteile des Verfahrens sind die offene Bauform sowie die lange Behandlungsdauer auch bei geringer Wassermenge. Das Verfahren wurde beispielsweise für Waschbecken eingesetzt.

Die magnetische oder elektrostatische Behandlung von Wasser gegen die Bildung von hartem Kalkstein (auch physikalische Wasserbehandlung genannt) hat zwar in vielen Anwendungen ihre Wirksamkeit gezeigt, aber die Wasserhärte bleibt nach der Behandlung unverändert und die kalkbildenden Elemente existieren weiter im Wasser und können bei einer Temperaturänderung oder unter anderen ungünstigen Bedingungen wieder zu Kalkstein werden. Die herkömmlichen elektrolytischen Behandlungen gegen Kalk benötigen eine hohe Stromstärke. Daraus resultieren ein großer Energiebedarf und technische Probleme wie Gasbildung, Kalkablagerung an Kathoden und dergleichen. Bisher wurde das Problem der Kalkablagerung an der Kathode durch Umpolen der angelegten Spannung an der Anode und der Kathode gelöst. Wenn jedoch die beiden Elektroden unterschiedliche Materialien besitzen, ist Umpolen nicht geeignet.

Es ist daher die Aufgabe der vorliegenden Erfindung, ein Verfahren zur Behandlung von mit Mikroorganismen und/oder Schadstoffen belastetem Wasser, insbesondere zur Desinfektion und/oder Verhinderung der Abscheidung von hartem Kalk an der Kathode sowie im gesamten Wassersystem, bei dem zwischen einer Anode und einer Kathode ein elektrischer Strom durch das Wasser hindurchgeführt wird, wobei eine mit einer Titandioxid enthaltenden Beschichtung vorgesehene Anode verwendet wird, anzugeben, das einen geringen Energieverbrauch hat und auch für die Behandlung großer Wassermengen geeignet ist. Außerdem sollen die Chlorgas-Erzeugung und die damit verbundenen bekannten Probleme der Holoformenbildung minimiert werden.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens sowie auch zweckmäßige Vorrichtungen zur Durchführung des erfindungsgemäßen Verfahrens ergeben sich aus den Unteransprüchen.

Dadurch, daß die Stärke des Gleichstroms so eingestellt wird, daß eine Ladungsmenge von 30 bis 60 Coulomb pro Liter im Wasser erzeugt wird, und daß eine Vermehrung des gelösten Sauerstoffs um 0,5 mg/l bis 1,8 mg/l im Wasser durch entsprechende Wahl des Anodenmaterials erreicht wird, wird eine katalytische Wirkung für den Austritt von Elektronen aus der Titandioxid enthaltenden Beschichtung der Anode erhalten. Es werden Elektronen des Halbleiters Titandioxid durch den elektrischen Strom für die Bildung von Sauerstoffradikalen an der Grenzschicht TiO₂-H₂O aktiviert. Es wird praktisch eine Elektrolyse-Konstruktion zur elektrischen Stromversorgung von TiO₂ verwendet, wobei sich das TiO₂ an der Grenzschicht Anode-Wasser befindet. Eine Elektrolyse findet jedoch nur in geringem Umfang statt, während der nützliche Anteil der zugeführten Energie dazu verwendet wird, daß die Elektronen an Atomen, Ionen oder Molekülen, die im Wasser oder an der Anodenoberfläche vorliegen, mittels direkter elektrischer Energiezufuhr anstelle der Energiezufuhr durch Licht oder UV-Strahlung auf einen höheren Energie zustand gebracht und dadurch aktiviert werden. Die so aktivierten Atome, Ionen und Moleküle bilden Sauerstoffradikale, die zur Desinfektion, Entgiftung, Entalgung, Desodorierung, Flockung, Verhinderung von Kalkabscheidungen durch Bildung von weichem Kalk an der Kathode und als Katalysator zur Verstärkung der Wirkung von zugesetzten Oxidationsmitteln wirken. Obwohl der Aktivierungszustand nur sehr kurze Zeit (ca. 10⁻⁶ s) Bestand hat, wurde festgestellt, daß die genannten Wirkungen im Wasser noch mehrere Stunden oder sogar Tage lang nach der Behandlung anhalten. Diese sogenannte Depotzeit verlängert sich mit der Zunahme der im Wasser erzeugten elektrischen Ladung und beträgt beispielsweise bei einer Ladungsmenge von 60 Coulomb pro Liter Wasser mehrere Tage.

Die an die Elektroden angelegte Dauergleichspannung sollte die Überwindungsspannung gegen die sogenannte elektromotorische Kraft nicht wesentlich überschreiten, so daß die Gasbildung von O₂ und Cl₂ an der Anode durch Elektrolyse noch gering ist. Die O₂-Zunahme beträgt typischerweise weniger als 1 mg/l in fließendem Wasser. Eine Sauerstofferzeugung ist auch erwünscht, da durch die Aktivierung auch freie Sauerstoffradikale entstehen, die zu der desinfizierenden Wirkung beitragen. Sauerstoffradikale sind Radikale vom Typ Hyperoxid, Hydroxyl, OR- oder O-OH, O-O-OH und O-O-R (R = organischer Rest), die bei ihrer Rekombination gegebenenfalls Singulett-Sauerstoff erzeugen.

Es ist ausreichend, daß die Erhöhung des Sauerstoffgehalts des Wassers aufgrund der Elektrolyse unterhalb 1/10 der Sättigungsgrenze für die Aufnahme von Sauerstoff ist. Bei 10° C, 1 bar beträgt die Sättigungsgrenze 11,23 mg/l. Die hierfür erforderliche Ladungsmenge liegt zweckmäßig zwischen 30 und 60 Coulomb/Liter Wasser, wobei diese von der Wasserqualität und dem Wirkungsanforderungen abhängig ist. Die Stromdichte an der Anode beträgt zwischen 1 mA/cm² und 20 mA/cm², insbesondere zwischen 4 mA/cm² und 10 mA/cm².

Die angelegte Spannung ist von der Anordnung und Form, dem Material, der Oberflächenbeschaffenheit und dem Abstand der Elektroden sowie der Leitfähigkeit, Durchflußmenge und Temperatur des Wassers abhängig und liegt vorteilhaft im Bereich von 2 V bis 36 V, bevorzugt zwischen 2,5 V und 8 V.

Die Erzeugung von Sauerstoffradikalen ist ein Vorgang, bei dem die Elektronen von TiO₂ durch Zuführung elektrischer Energie auf ein Niveau höherer Energie springen, wobei durch Übertragen der Aktivierung von Elektronen im Wasser die Entstehung ungepaarter Elektronen an Sauerstoffatomen, -molekülen und -ionen im Wasser ermöglicht wird. Da die Elektronenzufuhr und -aktivierung an der TiO₂-Schicht durch den elektrischen Strom viel direkter erfolgt als durch eine Licht/UV-Bestrahlung, ist der dadurch erzielte Wirkungsgrad höher und schneller erreichbar (Katalysewirkung des Gleichstroms).

Die Wirkung des erfindungsgemäßen Verfahrens wird nicht nur an der Anode erhalten, sondern im gesamten stromdurchflossenen Bereich des Wassers. Wenn der Wasserraum durch eine Membran in einen Anoden- und einen Kathodenbereich geteilt wird, werden Keime in beiden Bereichen abgetötet.

Um die Wirkung der aktivierten Elektronen zu verstärken, kann das erfindungsgemäße elektrochemische Verfahren zusätzlich mit einem physikalischen Verfahren durch Einwirkung eines elektrostatischen oder magnetischen Feldes vorbehandelt werden. In dem elektrostatischen oder magnetischen Feld wird das Wasser möglichst senkrecht zur Feldrichtung transportiert. Dadurch wird Sauerstoff polarisiert und damit verstärkt aktiviert, da er die Eigenschaft eines paramagnetischen Diradikals besitzt.

Zusätzlich empfiehlt sich eine Behandlung des Wassers mit Ultraschall. Durch diesen können relativ große Keimklumpen zerschlagen werden. Damit werden auch die in Schutzhüllen oder in großen Keimen versteckten Bakterien wie Legionellen abgetötet.

Das Material der Anode besteht aus Titan, das einer speziellen und wiederholten Wärmebehandlung (über 30mal mit jeweils über 900 °C) unterzogen wurde und daher eine wesentlich dickere TiO₂-Schicht aufweist als eine normale Titananode für Elektrolyse. Weiterhin soll die Anode an der Oberfläche neben Titandioxid auch einen bestimmten Anteil von Iridium und Kobalt enthalten. Durch diese Zusammensetzung der Anodenoberfläche kann die gewünschte Sauerstofferzeugung im Wasser erhalten werden. Außerdem wird durch eine erhöhte Sauerstoffbildung die Entstehung von Chlorgas herabgesetzt, das ein Konkurrenzprodukt zu Sauerstoff an der Anode ist.

Vorteilhaft besteht die Kathode aus Zink oder ist mit Zink beschichtet. Da Zink eine hohe Überspannung für Wasserstoffgas hat, wird dessen Entstehung minimiert Zusätzlich kann die Kathode in Form eines Gitternetzes oder Lochbleches ausgebildet sein, so daß ein Anhaften entstandener Gase weitgehend verhindert wird.

Insbesondere bei hochbelasteten Abwässern kann diesen zusätzlich ein Oxidationsmittel zum Beispiel in Form von Wasserstoffperoxid, Chlordioxid oder technisch reinem Sauerstoff beigegeben werden. Durch diese zusätzliche Zudosierung von Sauerstoff kann der Anteil der aktivierten Komponenten im Wasser erhöht werden.

Da durch das erfindungsgemäße Verfahren die Wirkung der zugesetzten Oxidationsmittel verstärkt wird, kann der Bedarf an Chemikalien herabgesetzt werden.

Es wurde auch festgestellt, daß durch das erfindungsgemäße Verfahren die Oberflächenladungen von Kolloiden im Wasser verändert werden. Dadurch wird die Abstoßung der Kolloide untereinander verringert und die Reichweite des dadurch entstehenden Grenzpotentials wird reduziert. Dies fördert die Flockung der Kolloide und setzt damit den Einsatz von Flockungsmitteln herab.

Bei einer Wassertemperatur oberhalb ca. 65° C tritt die Übersättigung von Kalziumkarbonat im Wasser besonders stark auf. Dessen Kristalle können dann in großer Menge in unterschiedlicher Größe, Dichte und Ausscheidungsform an der Wasseroberfläche, schwebend im Wasser, sedimentierend oder an der Heizfläche oder anderen Flächen haftend als Kalk existieren. Das erfindungsgemäße Verfahren hat auf die Kalkabscheidung aus dem Wasser die folgenden Wirkungen. Bei höheren Temperaturen werden einige der im Wasser löslichen Ionen als Kalkstein an der Kathode ausgeschieden, jedoch in einer weichen, lockeren Kristallisationsform. Die weichen Kalksteine sedimentieren, lagern sich aber nicht auf den nachgeschalteten Heizflächen ab, sondern sammeln sich am Boden des Reaktors und können durch ein Entschlammungsventil abgeführt werden. Im Raumtemperaturbereich existieren durch die erfindungsgemäße Behandlung viele aktivierte Ionen, die untereinander große Anziehungskräfte im Wasser haben. Der Sättigungsgrad der Lösung wird so reduziert, daß die Ausscheidung von Kalkstein im nachfolgenden Wassersystem erschwert wird.

Für die Verhinderung von Kalkstein liegt die optimale Stromdichte bei etwa 1/20 bis 1/4 der für die Desinfektion erforderlichen Ladungsmenge bzw. Stromdichte, d. h. etwa zwischen 0,01 mA/cm² und 2 mA/cm², vorzugsweise zwischen 0,05 mA/cm² und 0,8 mA/cm². Zur Erzielung einer optimalen Desinfektion sowie einer optimalen Kalkverhinderung kann gegebenenfalls eine periodische Umschaltung zwischen den jeweils günstigsten Stromdichtewerten durchgeführt werden. Bei normaler Stromdichte tritt eine Kalkablagerung an der Kathode auf. Erhöht man die Stromdichte des Gleichstroms sprunghaft auf das etwa 4- bis 10-fache, dann löst sich der Kalk wieder von der Kathode. Diese Wirkung beruht vermutlich auf einer verstärkten Gasbildung (H₂) an der Kathode. Beträgt die normale Stromdichte beispielsweise 4 mA/cm², so können die Kalkablagerungen an der Kathode durch sprunghafte Erhöhung auf etwa 20 mA/cm² für mehrere Minuten beseitigt werden. Dieser Vorgang wird etwa im Tagesabstand wiederholt.

Das erfindungsgemäße Verfahren läßt sich auf stehendes als auch auf fließendes Wasser anwenden. Es sind Durchsätze bis zu mehreren hundert Kubikmetern pro Stunde möglich. Die Behandlungsdauer beträgt vorzugsweise etwa 10 s; es können jedoch beispielsweise auch 3 s ausreichend sein.

Vorteilhaft wird das erfindungsgemäße Verfahren in einem Reaktor durchgeführt, in welchem eine Drallströmung des Wassers erzeugt wird. Die Drallströmung erzeugt beim Durchgang durch ein elektrostatisches oder magnetisches Feld eine örtliche Strömung annähernd senkrecht zu der Feldrichtung, auch wenn die Hauptströmungsrichtung parallel zu der Feldrichtung orientiert ist. Bei geringer Durchflußmenge erzeugt Drall eine stabile Strömung ohne Schichtenbildung und unerwünschte Konvektionsströmungen. Durch den Drall ist die Funktion des Reaktors unabhängig von seiner räumlichen Lage und es werden die örtliche Strömungsgeschwindigkeit erhöht und der Durchgangsweg im Reaktor verlängert.

Durch eine spezielle Ausformung der Anodenoberfläche, zum Beispiel durch Riffelung, wird die örtliche Turbulenz erhöht und damit der Stofftransport von und zu der Anodenoberfläche gefördert. Zusätzlich wird vorteilhaft die Oberfläche der Anode vergrößert. Die Anode und Kathode können auch aus einem Gitternetz, Sieb oder Lochblech bestehen, die rohrförmig, halbkugelförmig oder plattenförmig sind.

Die Erfindung wird im folgenden anhand von in den Figuren dargestellten Ausführungsbeispielen näher erläutert. Es zeigen:
- Fig. 1: eine Illustration des Arbeitsbereiches des erfindungsgemäßen Verfahrens,
- Fig. 2: ein Diagramm zur Darstellung der Abhängigkeit des Desinfektionsgrades und der Vermehrung des gelösten Sauerstoffs von der elektrischen Ladungsmenge für ein Ausführungsbeispiel des erfindungsgemäßen Verfahrens, und
- Fign. 3 bis 10: verschiedene Reaktoren zur Durchführung des erfindungsgemäßen Verfahrens.

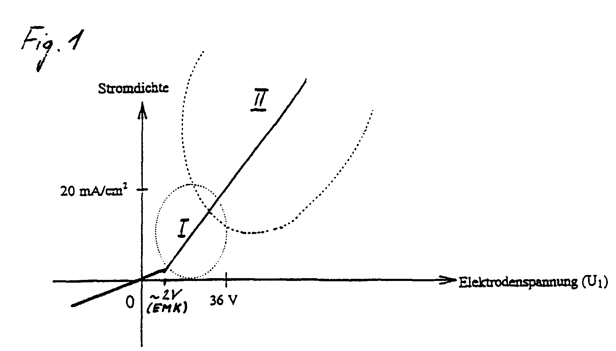

Die Kennlinie in Fig. 1 zeigt die Abhängigkeit der Stromdichte von der angelegten Elektrodenspannung für eine bestimmte Elektrodenanordnung. Der punktiert umrandete Bereiche I ist etwa der Arbeitsbereich des erfindungsgemäßen Verfahrens, während der punktiert umrandete Bereich II etwa der Arbeitsbereich für herkömmliche Elektrolyseverfahren ist.

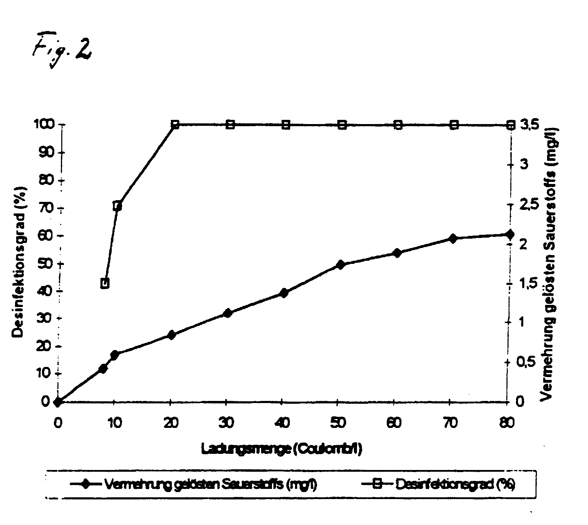

Fig. 2 zeigt die Ergebnisse eines Ausführungsbeispiels des erfindungsgemäßen Verfahrens. Bei diesem Verfahren wurden die folgenden Schritte durchgeführt:
a) Vorbereitung des zu behandelnden Wassers (Originalwasser)
   Leitungswasser wird zunächst durch einen Aktivkohle-Filter behandelt, um mögliche organische Stoffe und freies Chlor zu absorbieren. Dadurch gelangen natürliche Keime aus dem Filter ins Wasser. Durch einen DPD-Test wurde festgestellt, daß in dem Wasser kein freies Chlor mehr vorhanden war. Zusätzlich werden im Labor gezüchtete Coli-Bakterien ins Wasser gemischt. Die gesamte Keimkonzentration im Wasser beträgt über 10⁵ Stk. bis 10⁸ Stk. pro ml.
b) Wasserparameter
   Wassertemperatur: 20 °C, Wasserleitfähigkeit: 0,5x10³µS, pH-Wert: ca. 7
c) Messung des gelösten Sauerstoffs
   Online-Messung mit einer Sauerstoffelektrode
d) Mikrobiologische Untersuchung
   Als Meßergebnis ist die Gesamtzahl der koloniebildenden Einheiten (KBE/ml) dargestellt, die mit Hilfe des Oberflächenverfahrens auf Caseinpepton-Sojamehlpeton (CS-Agar) mit einer Bebrütungstemperatur von 36 °C nach 24 Stunden ermittelt werden.
   Wasserproben werden unmittelbar vor und nach der Behandlung am Zu- und Ablauf des zu patentierenden Gerätes entnommen und innerhalb 20 Minuten mikrobiologisch untersucht. Die Reaktionszeit des Wassers beträgt ca. 9 Sekunden. Dies ist die Zeit, die das Wasser benötigt, um vom Zulauf durch das Gerät zum Ablauf zu strömen. Die Desinfektionswirkung oder Keimreduktionsrate wird wie folgt definiert:
   - Desinfektionswirkung =: (Zulaufskeimzahl - Ablaufskeimzahl)/Zulaufskeimzahl

Wie Fig. 2 zeigt, steigt die Zunahme des gelösten Sauerstoffs kontinuierlich mit wachsender Ladungsmenge im Wasser an und ein Desinfektionsgrad von 100 % wird bereits bei etwa 20 Coulomb/Liter Wasser erreicht. Eine größere Ladungsmenge kann daher den Desinfektionsgrad nicht mehr erhöhen; jedoch nimmt mit der Ladungsmenge die Dauer zu, in der die Desinfektionswirkung nach der Behandlung anhält (Depotzeit).

Das Verfahren wird so eingestellt, daß das Produkt aus Stromdichte an der Anode und elektrischer Ladungsmenge konstant ist. Ändert sich das Wasservolumen pro Zeiteinheit, so muß die Stromstärke proportional verändert werden. Es ist daher ausreichend, die Stromstärke und den Wasservolumenstrom zu messen. Die Größe der Konstanten ist von der Wasserqualität und den Anforderungen an die Behandlung abhängig.

Bei einem zweiten Ausführungsbeispiel wurde die Desinfektion mit Depotwirkung für Wasser ohne Chlorid ermittelt. Hierbei wurden die folgenden Schritte durchgeführt:
a) Zubereitung von Wasser ohne Chlorid: **Wasser (a)** Destilliertes Wasser wurde mit verschiedenen Salzen gemischt und danach die angegebenen Konzentrationen gemessen:

| | |
|---|---|
| CaSO₄ 2H₂O | 100 mg/l |
| MgSO₄ | 60 mg/l |
| NaHCO₃ | 60 mg/l |

Das Wasser (a) ist keimfrei.
b) Behandlung des zubereiteten Wassers (a): **Wasser (b)**
Das wie oben zubereitete Wasser (a) wurde durch das zu patentierende Gerät mit einer Stromdichte von 2 mA/cm² an der Anode behandelt.
c) Coli-Bakterien wurden zu Wasser (a) gemischt: **Wasser (c)**
d) Wasser (c) wurde mit der gleichen Menge Wasser (b) gemischt: **Wasser (d)**
e) Mikrobiologische Untersuchung und Vergleich Wasser (c) mit Wasser (d)
Mit der gleichen Methode wie in Beispiel ld) wurde im Vergleich von Wasser (c) mit Wasser (d) in mehreren Versuchen eine Keimreduzierung von 99,9 % bis über 99,99 % registriert.

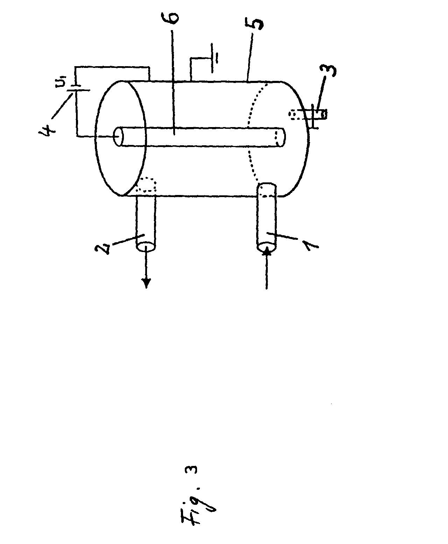

Fig. 3 stellt einen Reaktortyp in Form eines senkrecht stehenden Zylinders mit einem Zufluß 1 und einem Abfluß 2 für das Wasser sowie einem Entschlammungsventil 3 an der Unterseite dar. Es ist wichtig, daß der Zufluß 1 immer unterhalb des Abflusses 2 liegt. Das Entschlammungsventil 3 wird benötigt, um den sedimentierten Kalk aus dem Reaktor zu entfernen und um Wasser aus dem Reaktor abzulassen, damit bei ausgeschalteter Gleichspannungsquelle 4 eine durch die elektromotorische Kraft bewirkte Korrosion verhindert wird. Der Außenmantel des Reaktors, dessen Innenseite mit Zink beschichtet ist, besteht aus Edelstahl und stellt die Kathode 5 dar. Die Anode 6 ist ein konzentrischer Stab oder ein Rohr. Die Spannung U₁ der Gleichspannungsquelle 4 liegt zwischen der Kathode 5 und der Anode 6.

Für die Füllung des Reaktors notwendige, lageabhängig anzubringende Entlüftungsventile sind als technisch bekannt in den Figuren nicht dargestellt.

Bei dem Reaktortyp nach den Fig. 4a und 4b besteht der Außenmantel 7 aus Kunststoff oder Metall. Die Kathode 5 besteht aus einem Zinkgitternetz oder Lochblech, das an der Innenseite des Außenmantels 7 befestigt ist. Die Installation ist in beliebiger Lage möglich, das Entschlammungsventil 3 befindet sich an der tiefsten Stelle. Die Zuführung des Wassers durch den Zufluß 1 erfolgt gemäß Fig. 4a tangential oder gemäß Fig. 4b mit Hilfe ein Drallerzeugers 8.

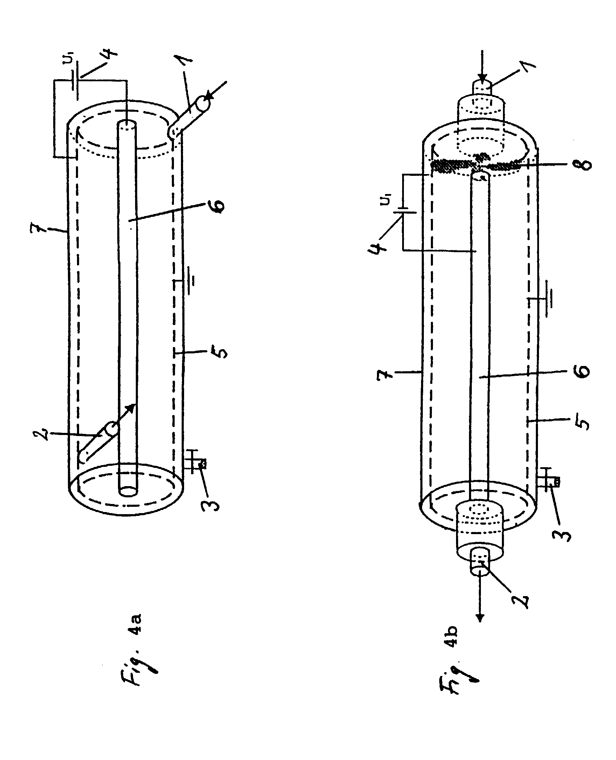

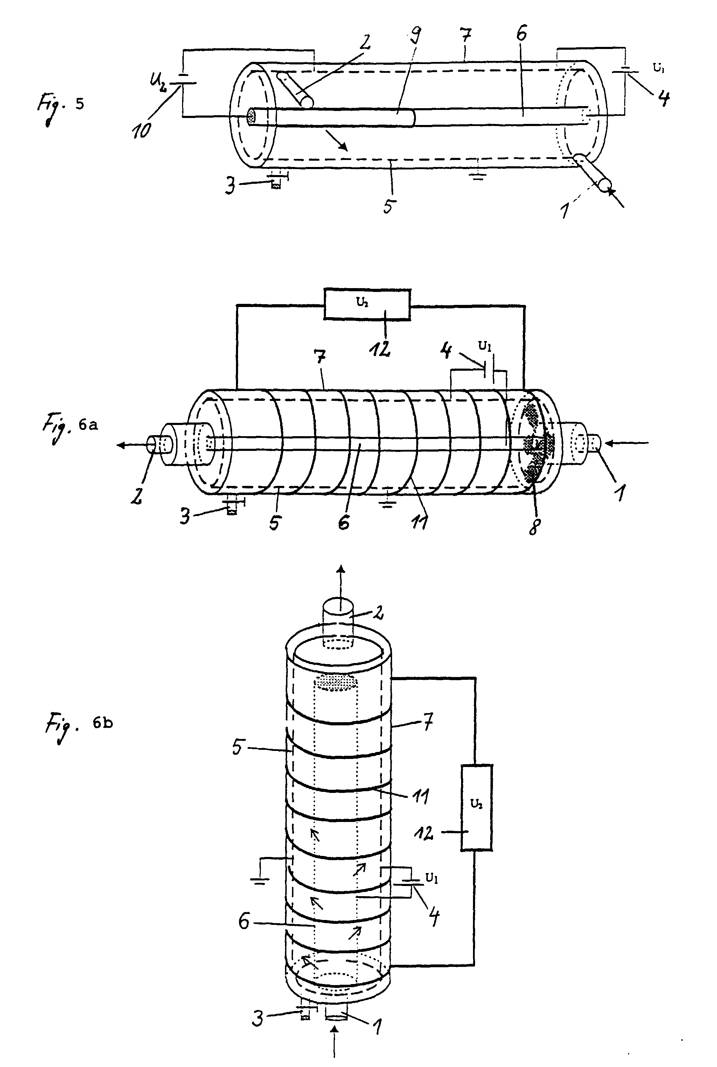

Die Fign. 5 und 6a bzw. 6b stellen Reaktortypen mit einem zusätzlichen elektrostatischen oder magnetischen Feld dar.

Fig. 5 zeigt einen Reaktortyp mit zusätzlichem elektrostatischem Feld. Der Außenmantel 7 aus Kunststoff oder Metall ist innen mit einer Kathode 5 in Form eines Zinkgitters ausgekleidet. Die Anode 6 besteht aus einem Stab, der in Längsrichtung von einem Ende bis ungefähr zur Hälfte in den Reaktor hineinragt. In Verlängerung der Anode 6 ist ein Stab 9 angebracht, der vollständig isoliert ist. Zwischen diesem Stab 9 und der Kathode 5 wird mittels einer Gleichspannungsquelle 10 eine Hochspannung U₂ angelegt. Die Hochspannung U₂ wird so gewählt, daß im Reaktor ein elektrostatisches Feld mit einer Feldstärke von 50 bis 500 kV/m gebildet ist. Die Installation des Reaktors ist lageunabhängig. Das Entschlammungsventil 3 befindet sich an der tiefsten Stelle und die Zuführung des Wassers über den Zufluß 1 in den Reaktor erfolgt tangential.

Fig. 6a enthält einen Reaktortyp mit zusätzlichem magnetischem Feld. Das Magnetfeld wird durch eine Spule 11 erzeugt, die um den Stutzen des aus Kunststoff bestehenden Zuflusses 1 des Reaktors gewickelt ist und an die durch eine Gleichspannungsquelle 12 eine Spannung U₂ angelegt ist. Der Außenmantel 7 besteht aus Kunststoff oder Metall und ist innen mit einer gitterförmigen Kathode 5 aus Zink ausgekleidet. Die Anode 6 besteht aus einem Stab. Die Installation ist lageunabhängig. In Zuführungsrichtung des Wassers befindet sich hinter dem Zufluß 1 ein Drallerzeuger 8.

Fig. 6b gibt ebenfalls einen Reaktortyp mit zusätzlichem magnetischem Feld wieder. Die Anordnung entspricht im wesentlichen der nach Fig. 6a. Die Anode 6 besteht jedoch aus einem zylinderförmigen Gitternetz oder Lochblech. Das Wasser strömt durch diese Anode 6 in den übrigen Reaktionsraum. Die Installation des Reaktors erfolgt vertikal. Es können mehrere zylinderförmige Anoden 6 nebeneinander angebracht werden.

Fig. 7a zeigt einen Reaktortyp, bei dem eine Anode 13 am Boden des Reaktors als Scheibe, die beispielsweise mit Rillen versehen ist, und eine Kathode 14 am oberen Ende des Reaktors als scheibenförmiges Zinkgitter oder Lochblech angeordnet sind. Der zylinderförmige Außenmantel 7 besteht aus Kunststoff oder isoliertem Metall und ist vertikal angeordnet. Der Zufluß 1 ist so ausgebildet, daß das zugeführte Wasser schräg auf die Anode 13 prallt. Die Abführung des Wassers erfolgt über einen konzentrischen Abfluß 15 oder über einen seitlich angeordneten Abfluß 16.

Fig. 7b zeigt einen Reaktortyp, bei dem das zu behandelnde Wasser durch eine halbkugelförmige bzw. auch als Platte ausgebildete, gitternetz- oder lochblechartige Anode 17 in den Reaktionsraum strömt. Die Kathode 18 kann als Zinkbeschichtung auf der Innenseite des Außenmantels 7 oder als getrenntes Gitter oder Platte ausgebildet sein.

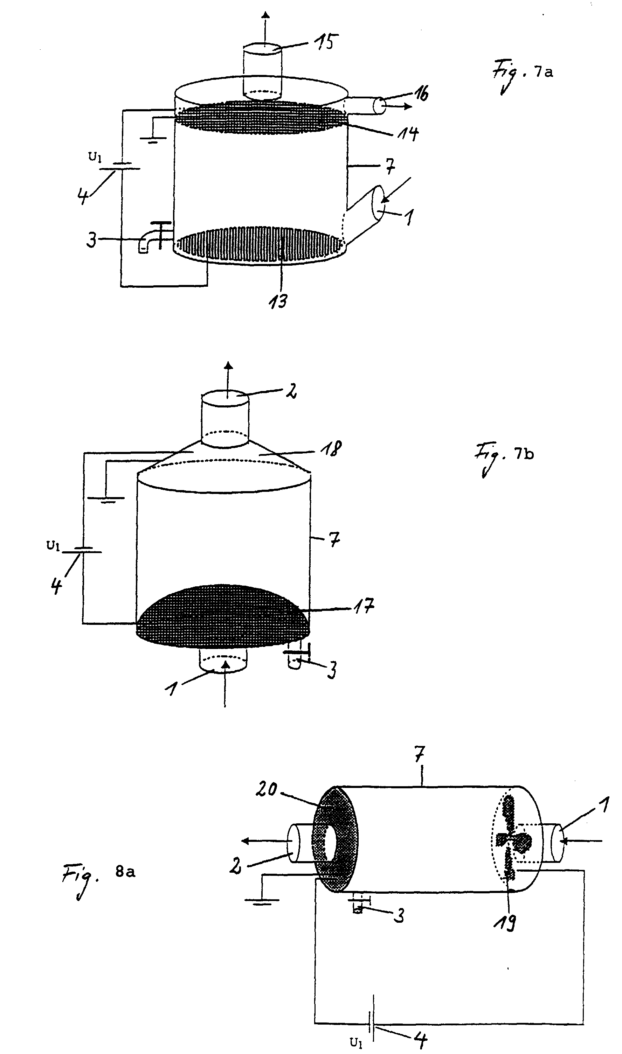

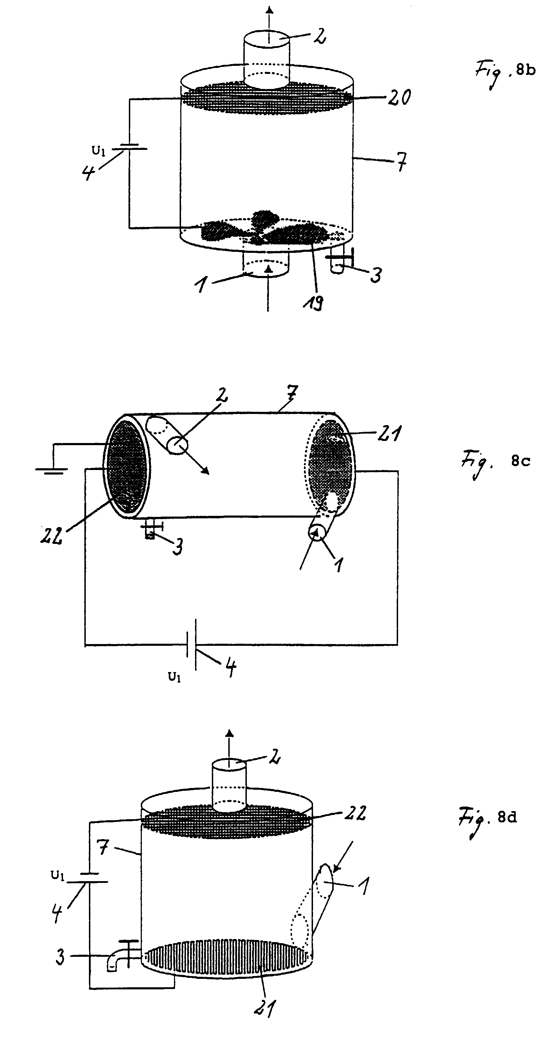

Fig. 8a stellt einen Reaktortyp dar, bei dem eine Anode 19 zusätzlich zur Drallerzeugung dient. Die Kathode 20 besteht aus einer Zinkplatte. Der Außenmantel 7 besteht aus Kunststoff oder isoliertem Metall. Die Installation des Reaktors ist lageunabhängig und die Zuführung des Wassers in den Reaktor erfolgt auf der Anodenseite.

Der Reaktor nach Fig. 8b entspricht dem nach Fig. 8a. Die Kathode 20 besteht jedoch aus einem Zink-Gitternetz.

Bei dem Reaktortyp nach Fig. 8c strömt das Wasser tangential in den Reaktor und prallt dabei schräg auf eine Anode 21, welche mit Rillen versehen sein kann. Die Kathode 22 besteht aus einer Zinkplatte. Der Außenmantel 7 ist aus Kunststoff oder isoliertem Metall gebildet, die Installation des Reaktors erfolgt beliebig.

Der Reaktor nach Fig. 8d entspricht dem nach Fig. 8c, wobei die Installation jedoch vertikal erfolgt. Die Kathode 22 besteht aus einem Zink-Gitternetz.

Bei dem Reaktor nach Fig. 8e strömt das Wasser durch eine gitternetzförmige Anode 23 und trifft dann auf einen Drallerzeuger 24 aus Kunststoff. Die Kathode 25 besteht aus einer Zinkplatte am anderen Ende des zylinderförmigen Außenmantels 7 aus Kunststoff oder isoliertem Metall. Die Installation des Reaktors erfolgt horizontal.

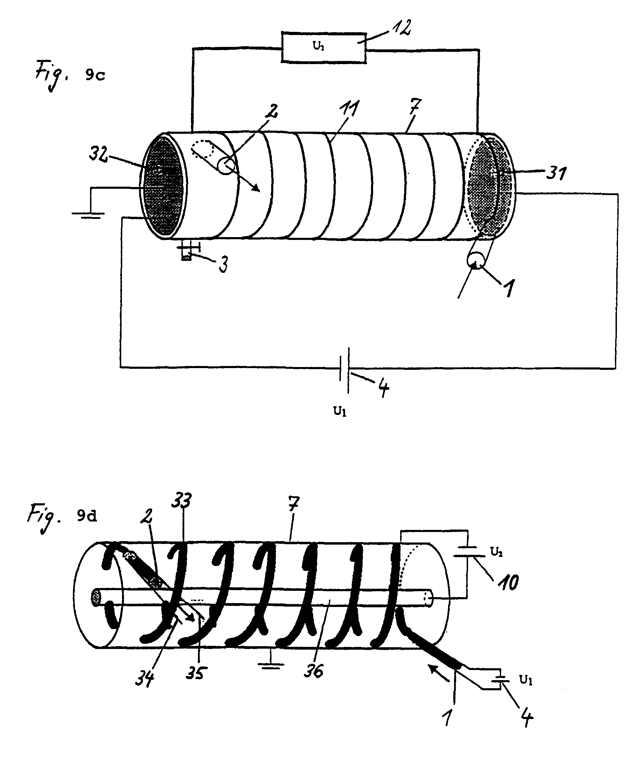

Fig. 9a zeigt einen Reaktor mit Drallvorrichtung und zusätzlichem elektrostatischem Feld. Der zylindrische Außenmantel 7 besteht aus Kunststoff oder isoliertem Metall. Das Wasser wird tangential in den Reaktor geführt und prallt schräg auf eine plattenförmige Anode 26, welche mit Rillen versehen sein kann. Eine Kathode 27 ist als Drallerzeuger oder Gitter ausgebildet und befindet sich in der Mitte des Reaktors. Zwischen der Kathode 27 und einer kreisförmigen Seitenscheibe 28 auf der Seite des Abflusses 2 ist mittels einer Gleichspannungsquelle 10 eine Hochspannung U₂ angelegt. Die Installation des Reaktors ist lageunabhängig.

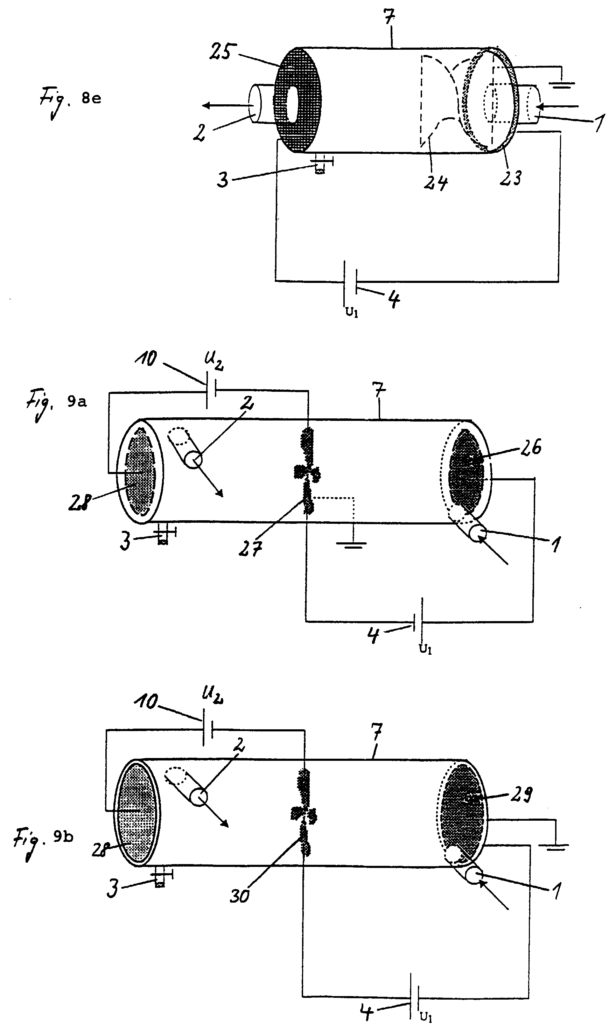

Der Reaktor nach Fig. 9b entspricht dem nach Fig. 9a, wobei jedoch die Polung umgekehrt ist. Das Wasser trifft somit zuerst auf die Kathode 29 und die Anode 30 ist in der Mitte des Reaktors als Drallerzeuger oder Gitter angeordnet.

Fig. 9c zeigt einen Reaktor mit Drallvorrichtung und zusätzlichem elektromagnetischem Feld. Der Außenmantel 7 aus Kunststoff ist von der Spule 11 zur Erzeugung des Magnetfeldes umgeben. Das Wasser wird tangential in den Reaktor geführt und prallt schräg auf die plattenförmige Anode 31, die mit Rillen versehen sein kann. Die Kathode 32 befindet sich am anderen Ende des Reaktors, dessen Installation lageunabhängig erfolgen kann.

Fig. 9d stellt wiederum einen Reaktor mit elektrostatischem Feld dar. Ein Rohr 33, durch welches das Wasser fließt, ist durchgehend mit zwei Drähten, die als Anode 34 und Kathode 35 dienen, versehen. Das Rohr 33 ist innerhalb des zylindrischen Außenmantels 7 um einen Mittelstab 36 gewickelt. Zwischen dem Stab 36 und dem Außenmantel 7 ist mittels der Gleichspannungsquelle 10 eine Hochspannung U₂ gelegt. Die Installation des Reaktors ist lageunabhängig.

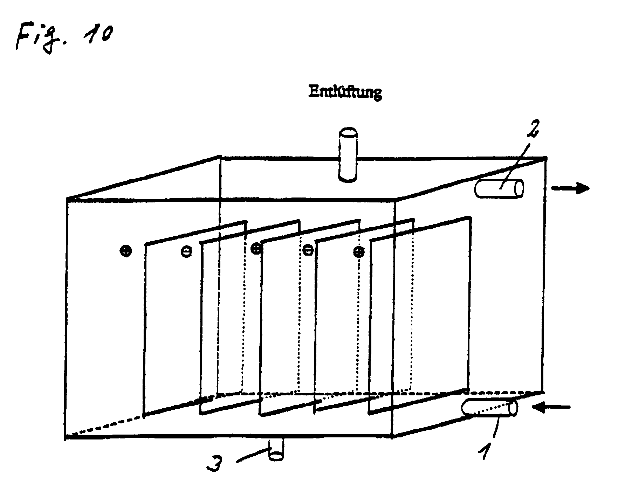

Die Anordnung aus plattenförmigen Elektroden kann auch mehrstufig hintereinander geschaltet werden, wobei die Feldrichtungen einander abwechselnd angeordnet sind (Fig. 10).

Durch einen hohen Wasserdruck im Reaktor kann bei gegebener Temperatur die Löslichkeit des Sauerstoffs im Wasser erhöht werden. Hierdurch wird eine Gasbildung verstärkt vermieden. Dies stellt eine Möglichkeit zur Erhöhung der Grenzenergie der aktivierten Elektronen dar.

Unter "Wasser" werden auch wäßrige Lösungen verstanden, die neben Schadstoffen auch Nährstoffe oder neutrale Stoffe gelöst enthalten.

## Patentansprüche

1. Verfahren zur Behandlung von mit Mikroorganismen und/oder Schadstoffen belastetem Wasser, bei dem zwischen einer Anode und Kathode ein elektrischer Gleichstrom durch das Wasser hindurch geführt wird, wobei eine mit einer Titandioxid enthaltenden Beschichtung versehene Anode verwendet wird,
**dadurch gekennzeichnet**,
daß die Stärke des Gleichstroms so eingestellt wird, daß eine Ladungsmenge von 30 bis 60 Coulomb pro Liter Wasser erzeugt wird, und daß eine Vermehrung des gelösten Sauerstoffs um 0,5 mg/l bis 1,8 mg/l im Wasser durch Verwendung einer Anode, die an der Oberfläche neben dem Titandioxid Iridium und Kobalt enthält, erreicht wird.

2. Verfahren nach Anspruch 1, dadurch gekennzeichnet, daß das Wasser zusätzlich mit Ultraschall behandelt wird.

3. Verfahren nach Anspruch 1 oder 2, dadurch gekennzeichnet, daß das Produkt aus Stromdichte an der Anode und elektrischer Ladungsmenge im Wasser konstant gehalten wird.

4. Verfahren nach einem der Ansprüche 1 bis 3, dadurch gekennzeichnet, daß die Stromdichte an der Anode im Bereich zwischen 4 mA/cm² und 10 mA/cm² liegt.

5. Verfahren nach einem der Ansprüche 1 bis 4, dadurch gekennzeichnet, daß die Spannung zwischen Anode und Kathode im Bereich zwischen 2 V und 36 V liegt.

6. Verfahren nach einem der Ansprüche 1 bis 5, dadurch gekennzeichnet, daß die Behandlungsdauer 2 bis 18 s, vorzugsweise etwa 10 s beträgt.

7. Verfahren nach einem der Ansprüche 1 bis 6, dadurch gekennzeichnet, daß die Stromdichte periodisch auf einen Wert im Bereich zwischen etwa 0,01 mA/cm² und 2 mA/cm² herabgesetzt wird.

8. Verfahren nach einem der Ansprüche 1 bis 7, dadurch gekennzeichnet, daß die Stromstärke kurzzeitig sprunghaft erhöht wird.

9. Verfahren nach Anspruch 8, dadurch gekennzeichnet, daß die Erhöhung auf etwa das 4- bis 10-fache erfolgt.

10. Vorrichtung zur Durchführung des Verfahrens nach einem der Ansprüche 1 bis 9, dadurch gekennzeichnet, daß die Anode an der Oberfläche mindestens 10 bis 40 g/m² Iridium und Kobalt (weniger als 10 % des Iridiums) enthält.

11. Vorrichtung zur Durchführung des Verfahrens nach einem der Ansprüche 1 bis 9, dadurch gekennzeichnet, daß die Kathode aus Zink besteht oder mit Zink beschichtet ist.

## Claims

1. Process for treating water contaminated with micro-organisms and/or harmful pollutants, in which an electrical direct current is ducted between an anode and a cathode through the water, using an titanium dioxide coated anode, **characterised in that** the voltage of the direct current is set in such a manner that a charge volume of between 30 and 60 coulomb/litre is produced, and an increase of dissolved oxygen between 0.5 mg/l and 1.8 mg/l in water is achieved by using an anode which contains at the surface, apart from titanium dioxide, iridium and cobalt.

2. Process according to Claim 1, **characterised in that** the water is additionally treated with ultra-sound.

3. Process according to Claim 1 or 2, **characterised in that** the product of current density on the anode and of electrical charge volume in the water is held constant.

4. Process according to one of Claims 1 to 3, **characterised in that** the current density on the anode lies in the region between 4 mA/cm² and 10 mA/cm².

5. Process according to one of Claims 1 to 4, **characterised in that** the current between anode and cathode lies in the region between 2 and 36 v.

6. Process according to one of Claims 1 to 5, **characterised in that** the duration of treatment is between 2 s and 18 s, preferably approximately 10 s.

7. Process according to one of Claims 1 to 6, **characterised in that** the current density is periodically reduced to a value in the region between approximately 0.01 mA/cm² and 2 mA/cm².

8. Process according to one of Claims 1 to 7, **characterised in that** the voltage is for a short time abruptly increased.

9. Process according to Claim 8, **characterised in that** the increase is by approximately 4 to 10 times.

10. Device for carrying out the process according to one of Claims 1 to 9, **characterised in that** the anode contains at the surface at least between 10 and 40 g/m² iridium and cobalt (less than 10% of the iridium).

11. Device for carrying out the process according to one of Claims 1 to 9, **characterised in that** the cathode is made of zinc or zinc-coated.

## Revendications

1. Procédé pour traiter une eau chargée de micro-organismes et/ou de substances nocives, selon lequel on fait circuler un courant électrique continu dans l'eau entre une anode et une cathode, en utilisant une anode pourvue d'un revêtement contenant du bioxyde de titane,
caractérisé en ce qu'on règle l'intensité du courant continu de manière à produire une quantité de charges de 30 à 60 coulombs par litre d'eau, et à obtenir un accroissement de l'oxygène dissous, de 0,5 mg/l jusqu'à 1,8 mg/l dans l'eau en utilisant une anode qui contient de l'iridium et du cobalt au niveau de la surface, en dehors du bioxyde de titane.

2. Procédé selon la revendication 1, caractérisé en ce qu'on traite l'eau en outre avec des ultrasons.

3. Procédé selon la revendication 1 ou 2, caractérisé en ce qu'on maintient constant le produit de la densité de courant au niveau de l'anode par la quantité de charges électriques dans l'eau.

4. Procédé selon l'une des revendications 1 à 3, caractérisé en ce que la densité de courant au niveau de l'anode est située dans la gamme comprise entre 4 mA/cm² et 10 mA/cm².

5. Procédé selon l'une des revendications 1 à 4, caractérisé en ce que la tension entre l'anode et la cathode est située dans la gamme comprise entre 2 V et 36 V.

6. Procédé selon l'une des revendications 1 à 5, caractérisé en ce que la durée de traitement est comprise entre 2 et 18 s et de préférence est égale à environ 10 s.

7. Procédé selon l'une des revendications 1 à 6, caractérisé en ce qu'on réduit la densité de courant périodiquement à une valeur située dans la gamme comprise entre environ 0,01 mA/cm² et 2 mA/cm².

8. Procédé selon l'une des revendications 1 à 7, caractérisé en ce qu'on augmente l'intensité du courant de façon brusque pendant un bref intervalle de temps.

9. Procédé selon la revendication 8, caractérisé en ce que l'augmentation se situe entre approximativement le quadruple et le décuple.

10. Dispositif pour la mise en oeuvre du procédé selon l'une des revendications 1 à 9, caractérisé en ce que l'anode contient au niveau de la surface au moins 10 à 40 g/m² d'iridium et de cobalt (moins de 10 % de l'iridium).

11. Dispositif pour la mise en oeuvre du procédé selon l'une des revendications 1 à 9, caractérisé en ce que la cathode est formée de zinc ou est recouverte de zinc.
